**Europäisches Patentamt**

**European Patent Office**

**Office européen des brevets**

(11) Publication number: **0 127 969**
**A1**

## (12) EUROPEAN PATENT APPLICATION

(21) Application number: **84303292.1**

(22) Date of filing: **16.05.84**

(51) Int. Cl.³: **F 16 K 31/04**

(30) Priority: **21.05.83 GB 8314126**

(43) Date of publication of application:
**12.12.84 Bulletin 84/50**

(84) Designated Contracting States:
**BE CH DE FR IT LI NL**

(71) Applicant: **CAMBRIDGE INSTRUMENTS LIMITED**
**Rustat Road**
**Cambridge CB1 3QH(GB)**

(72) Inventor: **Johnson, Douglas Cambridge Instruments**
**Ltd.**
**Black Automatic Controls Leafield Estate**
**Corsham Wiltshire SN13 9SP(GB)**

(72) Inventor: **Coldridge, Adrian Victor Cambridge**
**Instruments Ltd**
**Black Automatic Controls Leafield Estate**
**Corsham Wiltshire SN13 9SP(GB)**

(74) Representative: **Foster, David Martyn et al,**
**Mathisen, Macara & Co. Lyon House Lyon Road**
**Harrow Middlesex HA1 2ET(GB)**

(54) **Improvements in and relating to electrically operated valves.**

(57) An electrically operated valve (such as for controlling gas flows for example) having very low power consumption is described. The valve is opened by electrical energisation of a motor 26. Through a gear box, this causes a plate 20 to pivot in a clockwise direction, thus raising a rod 14 against a spring (not shown) and opening the valve. The plate 20 operates a plunger 30 of a microswitch 32 which interrupts the power supply to the motor 26. At the same time, the plate 20 is latched in the clockwise position by a permanent latch 34. The latter is of a type whose magnetic field can be interrupted by electrical energisation. When electrically energised, therefore, the latch 34 releases the plate 20 which thus turns in an anticlockwise direction under the influence of the spring, and opens the valve. As the plate 20 moves anticlockwise, the released microwitch 32 switches off the energisation to the latch 34. No power is thus consumed in holding the valves either in the open or in the closed position.

*FIG. 1.*

EP 0 127 969 A1

IMPROVEMENTS IN AND RELATING TO ELECTRICALLY OPERATED VALVES

The invention relates to electrically operated valves such as may be used for controlling the flow of fluids, for example gas.

Applications exist where it is desired to minimise the electrical power consumption of such valves, for example where they are to be battery powered.

According to the invention, there is provided an electrically operated valve which is electric-motor-driven between open and closed settings and which includes holding means for holding the valve in each said setting, neither said holding means consuming electrical power while holding the valve in its respective setting and one said holding means providing no resistance to driving of the valve from its respective setting to the setting of the other holding means.

According to the invention, there is also provided an electrically operated valve, comprising a valve operating member movable between a valve-open setting in which the valve is open and a valve-closed setting in which the valve is closed, spring means connected to the valve operating member to bias it into one said setting and to hold it in that setting, electric motor means connected to the valve operating member for driving it into the other said setting against the bias of the spring means, and electrically releasable latch means for holding the valve operating member in the other said setting without consumption of electrical power and being operative in response to momentary electrical energisation to release the valve operating member and to provide no mechanical resistance to its movement thereafter to the said one setting.

An electrically operated gas-flow control valve embodying the invention will now be described, by way of example only, with reference to the accompanying drawings in which:

Figure 1 is a side view of the valve;

Figure 2 is an end view looking in the direction of the arrow II of Figure 1;

Figure 3 is a section on the line III-III of Figure 2;

Figure 4 is an electrical circuit diagram of the valve; and

Figure 5 is a modified electrical circuit diagram of the valve showing additional features.

In the particular example being described, the valve is for controlling the flow of gas, such as in a domestic gas supply. As will be described in more detail below, the valve is electrically operated and is designed to have a very low electrical power consumption so that, for example, it may be powered by electrical batteries which need to be replaced only at long intervals. The valve may for example be used in conjunction with a coin or token-operated mechanism which, in response to insertion of the coin or token, causes the valve to be opened so as to permit the flow of a specified amount of gas to the consumer whereafter the valve automatically closes.

The valve has a main body 5 and input and output ports 6 and 8 respectively, the flow of gas being indicated by the arrow A.

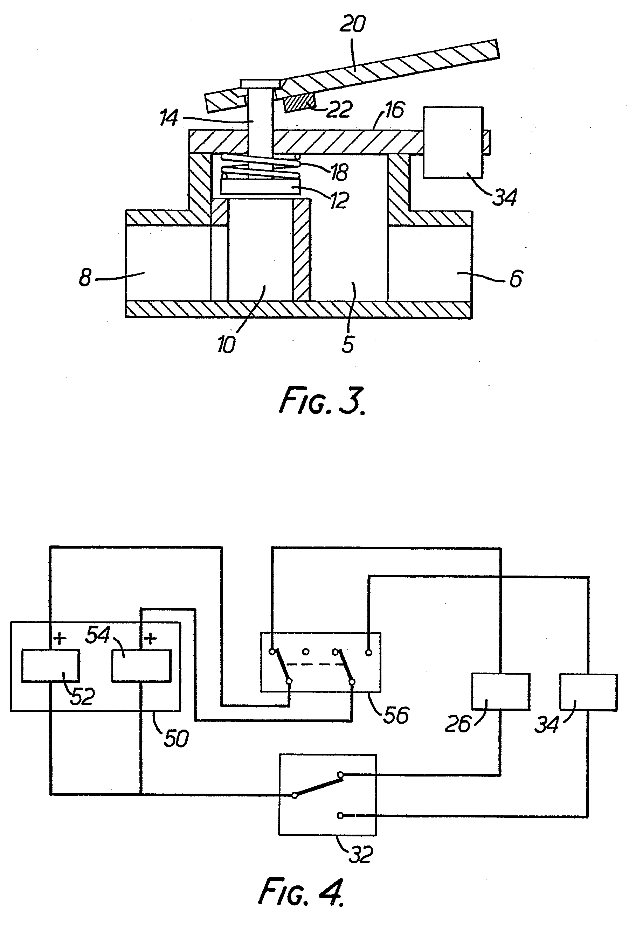

As best shown in Figure 3, the main body 5 contains an upstanding hollow cylindrical open-topped gas passage 10 which is in free communication with the output port 8. The open top of the gas passage 10 is closable by a circular plate 12 which is rigidly connected to a rod 14 passing through a top plate 16. A compression spring 18 acts between the underside of the top plate 16 and the circular plate 12 so as to press the latter down onto the open top of the passage 10, suitable sealing means (not shown) being provided between the underside of the plate 12 and the top of the passage 10. When in this position, therefore, the plate 12 blocks the passage of gas from the inlet port 6 to the outlet port 8.

When the valve is to be opened, the rod 14 is raised (in a manner to be more fully described below) against the compression of the spring 18, and gas can now flow from the inlet port 6, through the open top of the gas passage 10 and out through the outlet port 8. Suitable gas seals are provided where the rod 14 passes through the top plate 16.

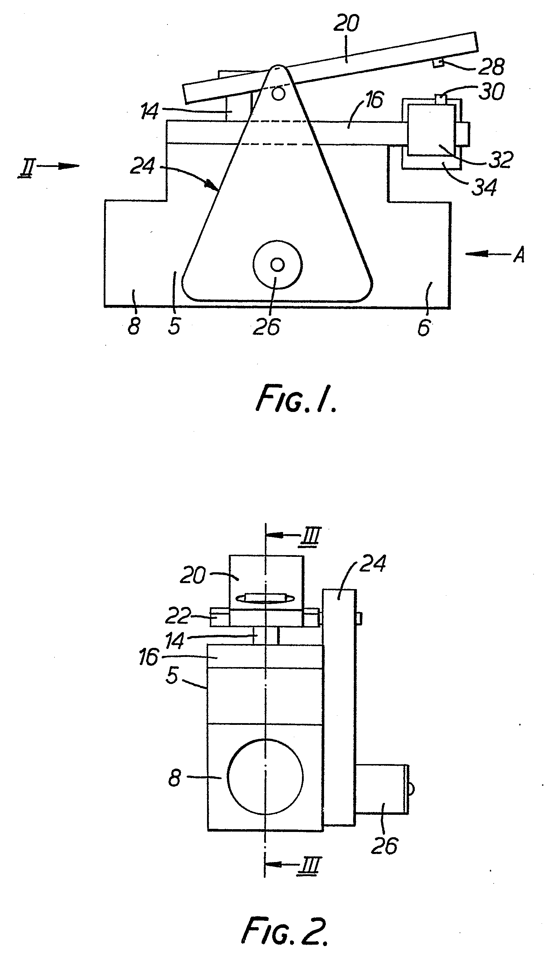

The rod 14 is linked by a suitable pivoting joint to a plate 20 (see also Figs. 1 and 2). Plate 20 is rigidly connected to an output shaft 22 of a reduction gear box 24. The gear box 24 links the shaft 22 with an electric motor 26. Therefore, when the motor is electrically energised, so as to be driven in the appropriate direction, it turns the spindle 22 and thus pivots the plate 20 in a clockwise direction (as viewed in Figures 1 and 3), thereby lifting the rod 14 and opening the valve.

As its end opposite to the rod 14, the plate 20 carries an offset member 28 which is in line with the plunger 30 of a microswitch 32 mounted on one side of an extension of the top plate 16 of the main valve body 5. Therefore, as the plate 20 pivots and the valve closing plate 12 (Fig. 3) becomes fully raised, the member 28 depresses the plunger 30 of the microswitch. At the same time, the underside of the metal plate 20 comes into contact with the upper part of a permanent magnet latch 34 which holds the plate 20 by magnetic attraction. The electric motor is automatically de-energised by the microswitch 32.

The valve is therefore now held in the fully open position against the action of the compression spring 18, and no electrical power is being consumed.

The latch 34 is of a type which can be electrically energised to interrupt its magnetic field. Therefore, when it is required to close the valve, the latch 34 is electrically energised. It therefore no longer magnetically attracts the plate 20 and the latter pivots in an anti-clockwise direction under the influence of the compression spring 18, and the valve closing plate moves into contact with the top of the gas passage 10. The valve is now closed. As the plate starts to move in this anticlockwise direction, it will release the plunger 30 of the microswitch 32, which interrupts the electrical energisation to the magnetic latch 34. No electrical power is therefore consumed in holding the valve in the closed position.

The electrical connections to the various components are omitted from Figures 1,2 and 3. The electrical circuit is shown in Figure 4.

The valve has an electrical power pack 50 which, in this example, is in the form of batteries providing a 12 volt power supply 52 and a 3 volt power supply 54. The positive side of the 12 volt power supply 52 is connected to one side of the motor 26 through an on-off switch 56. The positive side of the 3 volt power supply 54 is connected to the electrically releasable permanent magnet latch 34 through the same switch 56.

The negative sides of the two power supplies are connected together to the microswitch 32 which is of the change-over type, one of its output terminals being connected to the motor 26 and the other to the permanent magnet latch 34.

In Figure 4, the microswitch 32 is in its released position, that is, the plate 20 is clear of the plunger 30 (see Fig. 1). In addition, switch 56 is in the valve-opening position. In this position, it energises the motor 26 and the motor causes the plate 20 (Fig. 1) to turn in the clockwise direction so as to open the valve. As soon as the plate 20 depresses the plunger of the microswitch 32, the latter changes over and the motor is de-energised. As already explained, the valve is held in the open position by the magnetic latch 34. With the switch 56 in the position shown, the latch 34 is not electrically energised.

When it is desired to close the valve, the switch 56 is moved to the opposite setting and the latch 34 is now energised through the changed-over microswitch 32. This energisation interrupts the magnetic field of the latch 34 and the plate 20 now moves in an anticlockwise direction under the influence of the compression spring 18. As soon as the plunger 30 of the microswitch 32 is released, the latter changes over again, back to the position shown in Figure 4, and the latch 34 is de-energised.

The switch 56 is, in the application referred to above, arranged to be controlled by the coin or token-operated mechanism.

It will be appreciated that many modifications may be made to the valve described, both as far as its mechanical layout is concerned and its electrical circuitry. Instead of the permanent magnet latch 34, any other suitable form of releasable latch may be used, but preferably one which does not impose any mechanical resistance when moved into the latching position (because this would of course increased the electrical power required).

Although the circuit as shown uses two separate power supplies, 12 and 3 volts respectively, a single power supply can be used if the motor and the latch are appropriately rated.

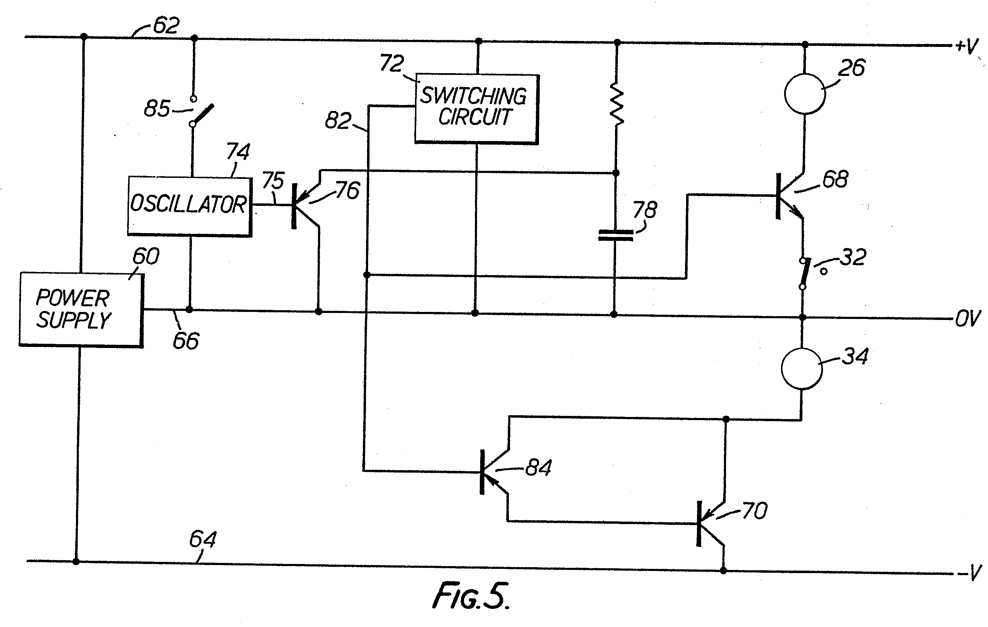

In an application where the valve is controlled by a coin or token-operated mechanism, or in other applications, it may be desirable to include suitable sensing circuitry to sense unauthorised inteference with the electrical connections. Figure 5 shows a circuit diagram of a modified circuit for the valve which includes such sensing circuitry, items in Figure 5 corresponding to those in the other Figures being correspondingly referenced.

As shown in Figure 5, a power supply 60 holds a conductor 62 at a positive voltage, a conductor 64 at a negative voltage and a conductor 66 at zero volts. The motor 26 is connected between the conductors 62 and 66 through an npn transistor 68 and the microswitch 32. The latch 34 is connected between the conductors 64 and 66 through a pnp transistor 70. The conduction of the transistors 68 and 70 is controlled by a switching circuit 72. Circuit 72 is energised by a pulse train produced by an oscillator circuit 74. The pulses are fed via a line 75 and a transistor 76 to charge a capacitor 78 which is connected to an input 80 of the circuit 72. For so long as the pulses maintain the capacitor 78 charged to at least a predetermined extent, the switching circuit 72 produces a positive output on a line 82 which maintains transistor 68 conductive and holds a transistor 84 non-conductive, the latter in turn holding transistor 70 non-conductive.

Figure 5 illustrates the microswitch 32 in its released position, that is, the plate 20 (Fig. 1) is clear of the plunger 30.

The switching circuit 72 and the oscillator circuit 74 are connected to be energised by the lines 62 and 66. A switch 85 enables the oscillator 74 to be switched off.

Assuming that the oscillator 74 is producing the pulse train on its output line 75, the switching circuit 72 will be holding transistor 68 conductive and transistor 70 non-conductive. Therefore, the motor 26 will be electrically energised and the motor causes the plate 20 (Fig. 1) to turn in the clockwise direction so as to open the valve. As soon as the plate 20 depresses the plunger of the microswitch 32, the latter is switched over and de-energises the motor. The valve is thus held in the open position by the magnetic latch 34. The latter is held un-energised by the non-conductive transistors 70 and 84.

When it is desired to close the valve, the switch 85 is opened, thus de-energising the oscillator 74. The latter no longer produces the pulse train and the switching circuit 72 thus changes over and switches its output line 82 negative. Transistor 68 is thus rendered non-conductive while transistor 84, and thus transistor 70, are rendered conductive. Latch 34 is now energised. Its magnetic field is thus interrupted and the plate 20 now moves in an anti clockwise direction under the influence of the compression spring 18 (Fig. 1) so as to close the valve. As soon as the plunger 30 of the microswitch 32 is released, the latter is switched back again to the position shown in Figure 5. However, the motor 26 will not be energised again, so as to open the valve, until switch 85 is closed so as to re-energise the oscillator 74.

Switch 85 may be arranged to be controlled by the coin or token-operated mechanism referred to above.

It will be apparent that not only does opening of the switch 85 cause the valve to be moved to the closed position, and held there, but so will any other interruption of the pulse train on the line 75. Line 75 is therefore physically arranged in such a manner that any unauthorised tampering with the valve or its associated power supply (and coin or token-operated mechanism) will break or sever the conductor 75, thus causing the valve to move to the closed position.

It will be appreciated that the motor 26 may be replaced by some other form of suitable electromechanical device, such as a solenoid, and any such device is included within the term "electric motor".

## CLAIMS

1.    An electrically operated valve which is drivable by an electric-motor (26) between open and closed settings and which includes holding means (18,34) for holding the valve in each said setting, characterised in that neither said holding means (18,34) consumes electrical power while holding the valve in its respective setting and one said holding means (34) provides no resistance to driving of the valve from its respective setting to the setting of the other holding means (18).

2.    A valve according to claim 1, characterised in that the other said holding means (18) comprises spring means (18) whose bias holds the valve in the respective setting, the valve being driven to the setting of the said one holding means (34) against the bias of the spring means (18) by the said motor (26) and the bias being used to drive the valve to the setting of the said other holding means.

3.    A valve according to claim 1 or 2, characterised in that the said one holding means (34) comprises electrically releasable latch means (34).

4. A valve according to claim 3, characterised in that the electrically releasable latch means (34) comprises a permanent magnet for holding the valve in the respective setting and electrically operated means which is temporarily electrically energisable to interrupt the magnetic field produced by the permanent magnet.

5. A valve according to claim 3 or 4, characterised by means (72) for electrically releasing the latch means (34) in the event of unauthorised interruption of the power supply to the electric motor (26).

6. An electrically operated valve, comprising a valve operating member (20) movable between a valve-open setting in which the valve is open and a valve-closed setting in which the valve is closed, spring means (18) connected to the valve operating member (20) to bias it into one said setting and to hold it in that setting, and an electric motor (26) connected to the valve operating member (20) for driving it into the other said setting against the bias of the spring means (18), characterised by electrically releasable latch means (34) for holding the valve operating member (20) in the other said setting without consumption of electrical power and which is operative in response to momentary electrical energisation to release the valve operating member (20) and to provide no mechanical resistance to its movement thereafter to the said one setting.

7. A valve according to claim 6, characterised in that the electrically releasable latch means (34) comprises a permanent magnet for holding the valve operating member in the said other setting and electrically energisable means for temporarily interrupting the magnetic field produced by the permanent magnet.

8. A valve according to claim 6 or 7, characterised by a switch (32) mounted to be automatically operated by the valve operating member (20) as the latter moves into the said other setting whereby to de-energise the motor (26) and to be automatically operated when the valve operating member (20) moves away from the said other setting in response to energisation of the electrically energisable means (34) whereby to de-energise the latter.

9. A valve according to any one of claims 6 to 8, characterised by electrical circuit means (72) connected to the electrically releasable latch means (34) and switchable between a first state in which it prevents electrical energisation of the latch means (34) and a second state in which it causes electrical energisation of the latch means (34), and electrical conductor means (75) carrying a power supply for holding the circuit means (72) in the said first state and whose interruption automatically switches the circuit means (72) into the said second state.

10. A valve according to claim 9, characterised in that the electrical power supply on the said conductor (75) comprises a pulse train having a predetermined amplitude and frequency and in which the circuit means (72) includes means which requires pulses at at least the said predetermined amplitude and frequency in order to hold the circuit means in the said first state.

FIG.1.

FIG.2.

FIG. 3.

FIG. 4.

*FIG.5.*

European Patent
Office

**EUROPEAN SEARCH REPORT**

0127969

Application number

EP 84 30 3292

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 955 792 (CHO)<br><br>* column 1, lines 63-69; column 4, lines 48-51 * | 1,2,3, 6 | F 16 K 31/04 |
| A | FR-A-2 065 291 (JUNKERS) | | |
| A | FR-A-1 276 588 (HONEYWELL) | | |
| A | FR-A-1 347 694 (SHELL) | | |
| A | US-A-3 430 916 (RAYMOND) | | |
| A | US-A-2 930 571 (VOGL) | | TECHNICAL FIELDS SEARCHED (Int. Cl. ³)<br><br>F 16 K |

The present search report has been drawn up for all claims

| Place of search<br>THE HAGUE | Date of completion of the search<br>30-08-1984 | Examiner<br>VERELST P.E.J. |
|---|---|---|